# EUROPEAN PATENT SPECIFICATION

(11) **EP 2 082 953 B1**
(45) Date of publication and mention of the grant of the patent: **01.02.2012**
(21) Application number: 08159319.6
(22) Date of filing: 30.06.2008
(51) Int. Cl.: B62M 25/08, B62L 3/02, B62K 23/06, B62M 25/04, B62J 99/00

(54) **Bicycle control device**
Steuerungseinrichtung für ein Fahrrad
Dispositif de commande d'une bicyclette

(30) Priority: 24.01.2008 US 18826
(43) Date of publication of application: 29.07.2009
(73) Proprietor: SHIMANO INC., Osaka 590-8577 (JP)
(72) Inventor: Tetsuka, Toshio, Osaka 590-8577 (JP); Matsushita, Tatsuya, Osaka 590-8577 (JP)
(74) Representative: GROSSE SCHUMACHER KNAUER VON HIRSCHHAUSEN

(56) References cited:
- EP-A- 0 878 383
- EP-A- 1 245 482
- EP-A- 1 264 765
- EP-A- 1 342 655
- EP-A- 1 473 217
- EP-A- 1 739 001
- EP-A- 1 832 504
- EP-A- 1 964 761
- EP-A- 1 964 765
- JP-A- 10 076 869
- US-A- 4 071 892
- US-A- 6 142 281
- US-A1- 2002 020 246
- US-A1- 2004 089 092

## Description

### BACKGROUND OF THE INVENTION

### Field of the Invention

This invention generally relates to control devices for bicycles. More specifically, the present invention relates to control devices for bicycles that include at least one non-shifting control switch.

### Background Information

Bicycling is becoming an increasingly more popular form of recreation as well as a means of transportation. Moreover, bicycling has become a very popular competitive sport for both amateurs and professionals. Whether the bicycle is used for recreation, transportation or competition, the bicycle industry is constantly improving the various components of the bicycle.

Recently, bicycles have been equipped with a cycle computer for displaying riding conditions (bicycle speed, cadence, rear and front sprocket positions, heart rate, energy consumption, etc.). A display mode switch for changing information displayed on screen is provided on the cycle computer. Some bicycles are equipped with an electrically controlled derailleur. This electrical derailleur control system uses an adjust mode enter switch for adjusting an initial position of the electrically controlled derailleur. Thus, these electrical bicycle components often require an electrical switch to be provided in an area that is convenient to operate. Typically, the cycle computer has the display mode switch thereon or a separate electrical switch that is mounted on the handlebar to operate the electrical bicycle components. In addition, other electrical bicycle components (e.g., various lights such as a headlamp) that are separate from the shifting systems also use a separate electrical switch.

Document EP 0 878 383 A shows a bicycle control device with features according to the preamble of claim 1 of the invention. The bicycle control device comprises a brake lever and a bracket member with a main body configured to form a gripping part. A control switch is disposed on the main body and has a push button projecting from a surface of the main body. The control switch is disposed in a side surface of the gripping part that faces the center of the bicycle, and thereby prevents unintentional operation of the switch. This bicycle control device has a control switch that is arranged at a position in the surface on the main body that is restricted to an area of the main body that is not usually gripped by the rider's hand.

In view of the above, it will be apparent to those skilled in the art from this disclosure that there exists a need for an improved bicycle control device which can allow the rider to operate these infrequently operated electrical bicycle components. This invention addresses this need in the art as well as other needs, which will become apparent to those skilled in the art from this disclosure.

### SUMMARY OF THE INVENTION

In view of the above, it has been discovered that it is desirable to provide a non-shifting control switch on a bicycle control device that can be used to operate an infrequently operated electrical device in particular. However, many locations on the bicycle control device that are convenient to operate the switch are also locations that may result in unintentional operation by the rider during normal riding conditions. Thus, it is desirable to locate the electrical switch in an area where the rider's hand must move from its normal riding position to intentionally operate the switch.

One object of the present invention is to provide a bicycle control device with an auxiliary electrical switch that can be used to operate an infrequently operated electrical device, but which is configurated and arranged to avoid unintentional operation by the rider during normal riding conditions.

The foregoing objects can basically be attained by providing a bicycle control device according to claim 1. The bicycle control device is provided with a bracket member, a brake lever and a non-shifting control switch. The bracket member has a handlebar mounting part and a main body with an upper surface, a pair of side surfaces and a lower surface, the main body being configured to form a gripping part. The brake lever is pivotally coupled to the main body of the bracket member at a coupling point such that the brake lever extends from the coupling point in a direction opposite of the upper surface with a majority of the brake lever being disposed below the handlebar mounting part. The non-shifting control switch is disposed on the main body of the bracket member in an area of the upper surface of the main body. The non-shifting switch is disposed in a recess in the upper surface of the gripping part such that it does not project from the upper surface.

These and other objects, features, aspects and advantages of the present invention will become apparent to those skilled in the art from the following detailed description, which, taken in conjunction with the annexed drawings, discloses preferred embodiments of the present invention.

### BRIEF DESCRIPTION OF THE DRAWINGS

Referring now to the attached drawings which form a part of this original disclosure:
Figure 1 is a side elevational view of bicycle equipped with a pair of road bicycle control (brake/shift) devices (only one shown) coupled to a drop type handlebar in accordance with a first embodiment;
Figure 2 is a top perspective view of the handlebar portion of the bicycle showing the road bicycle control (brake/shift) devices coupled to a drop type handlebar;
Figure 3 is an inside elevational view of one of the bicycle control (brake/shift) devices illustrated in Figures 1 and 2 with the braking position of the brake lever shown in phantom lines;
Figure 4 is a rear elevational view of the bicycle control (brake/shift) device illustrated in Figure 3 with the shifting position of the brake lever shown in phantom lines;
Figure 5 is a rear elevational view of the bicycle control (brake/shift) device illustrated in Figures 3 and 4 with the shifting position of the shift lever shown in phantom lines;
Figure 6 is a partial top perspective view of the bicycle control (brake/shift) device illustrated in Figures 4 and 5;
Figure 7 is a cross sectional view of the bicycle control device illustrated in Figures 4 to 6 as seen along section line 7-7 of Figure 4;
Figure 8 is a top plan view of the bicycle control (brake/shift) device illustrated in Figures 4 to 7;
Figure 9 is a partial cross sectional view of the bicycle control device illustrated in Figures 4 to 8 as seen along section line 9-9 of Figure 8;
Figure 10 is a partial cross sectional view, similar to Figure 9, of the bicycle control device illustrated in Figures 4 to 8, but with the electrical (non-shifting control) switch depressed;
Figure 11 is a partial top perspective view of a bicycle control (brake/shift) device illustrated in accordance with an example;
Figure 12 is a top plan view of the bicycle control (brake/shift) device illustrated in Figure 11;
Figure 13 is a partial cross sectional view of the bicycle control device illustrated in Figures 11 and 12 as seen along section line 13-13 of Figure 12;
Figure 14 is a partial cross sectional view, similar to Figure 13, of the bicycle control device illustrated in Figures 11 and 12, but with the electrical (non-shifting control) switch depressed; and
Figure 15 is a perspective view of a bicycle control (braking) device in accordance with a second embodiment.

### DETAILED DESCRIPTION OF THE PREFERRED EMBODIMENTS

Selected embodiments of the present invention will now be explained with reference to the drawings. It will be apparent to those skilled in the art from this disclosure that the following descriptions of the embodiments of the present invention are provided for illustration only and not for the purpose of limiting the invention as defined by the appended claims.

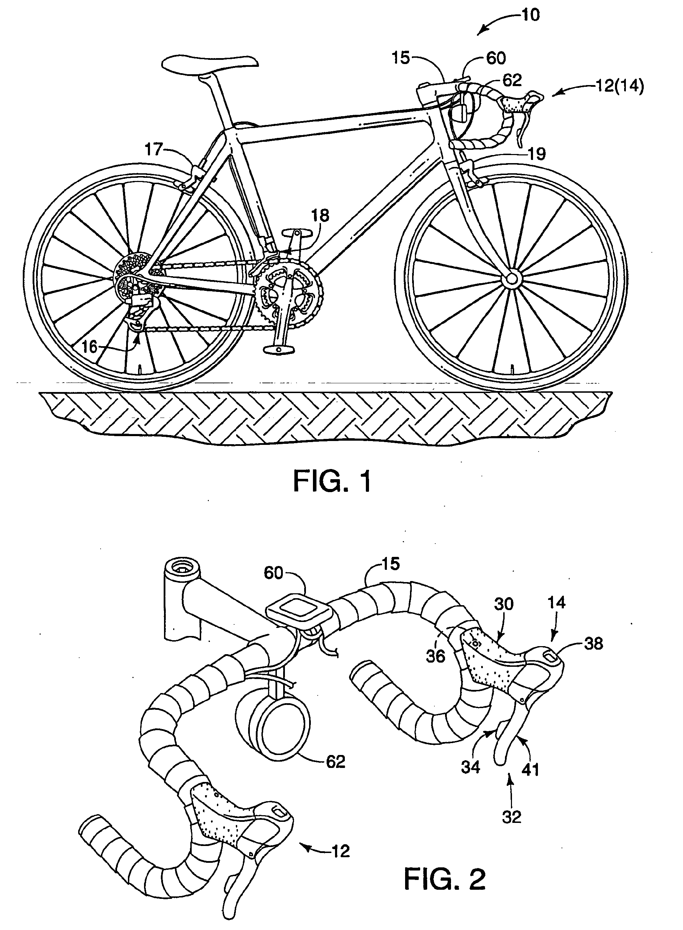

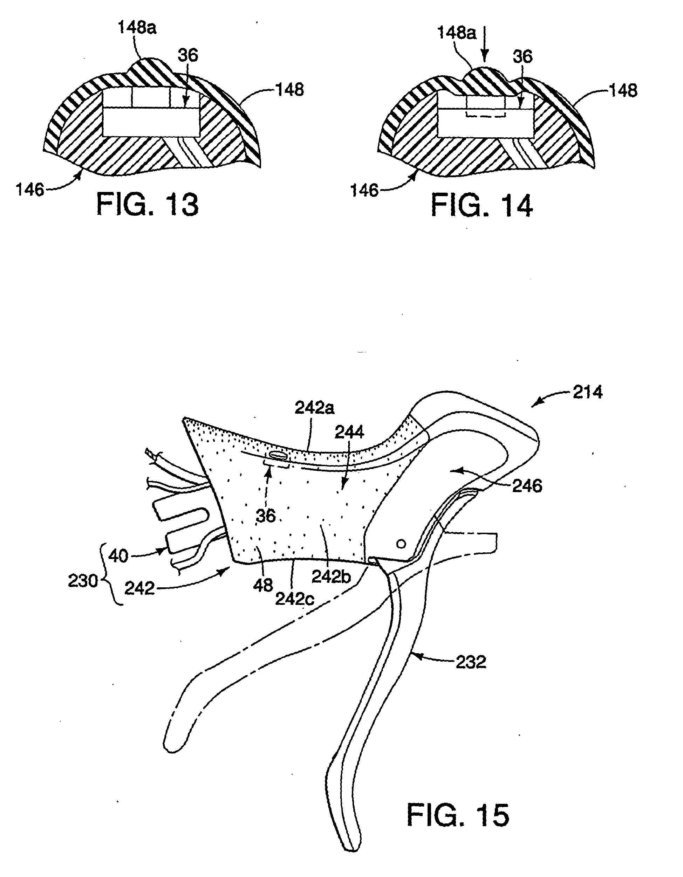

Referring initially to Figures 1 and 2, a bicycle 10 is illustrated with a pair of bicycle control devices 12 and 14 mounted on a drop down handlebar 15 in accordance with a first embodiment. In this first embodiment, the bicycle control devices 12 and 14 are brake/shift control devices which combine an electrical shifter with a brake lever. These types of bicycle control devices 12 and 14 are now commonly referred to as brifters, for their ability to combine the brake and shift functions into a single unit for use with one hand. The bicycle control devices 12 and 14 are road brifters that are used with the drop down handlebar 15. However, in other embodiments, the present invention can be used in other types of bicycle control devices that are mounted to a drop down handlebar such as a road brake lever as seen in Figure 15, which does not have any shifting capabilities or functions. Also, while the shifting is accomplished electronically in the bicycle control devices 12 and 14, the present invention can be used in a road brifter that mechanically winds and unwinds an inner wire to control a derailleur.

In this illustrated embodiment, as seen in Figure 1, the bicycle control device 12 is operatively coupled to a rear electrically powered derailleur 16 and a rear braking device 17, while the bicycle control device 14 is operatively coupled to a front electrically powered derailleur 18 and a front braking device 19. The bicycle control devices 12 and 14 are essentially identical in construction and operation, except that they are mirror images. Thus, only the bicycle control device 14 will be discussed and illustrated herein.

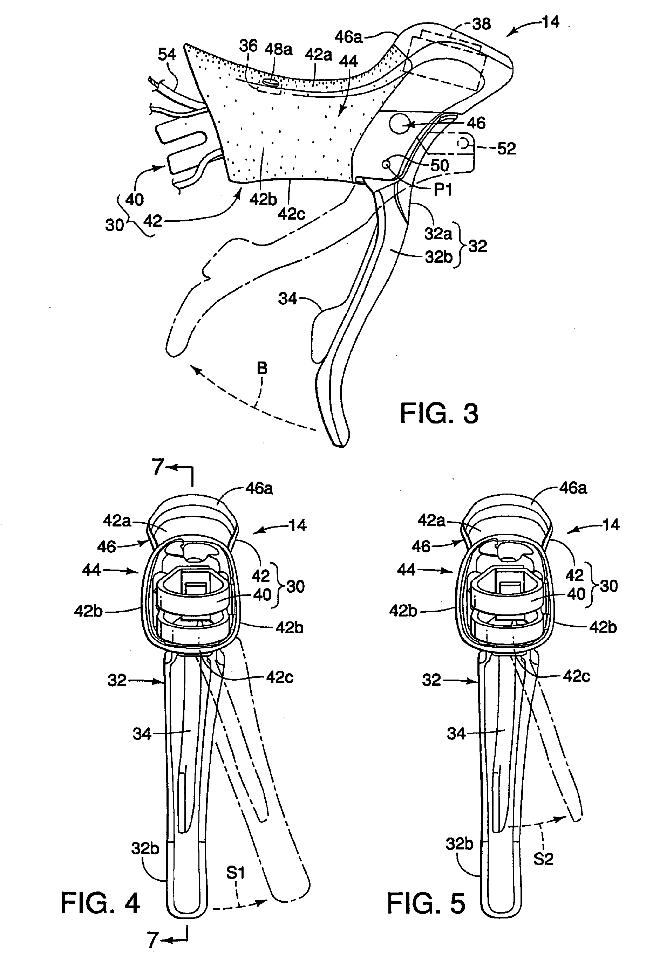

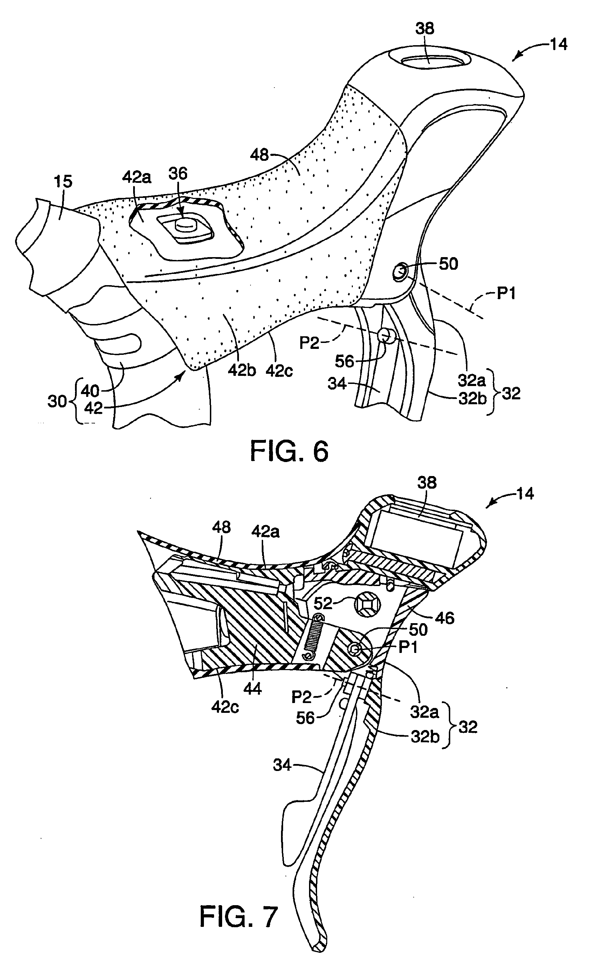

As best seen in Figures 3 to 6, the bicycle control device 14 basically includes a bracket member 30, a brake/shift lever 32, a shift operating lever 34, an electrical (non-shifting control) switch 36 and a built-in LCD display unit 38. In this embodiment, the bracket member 30 has a handlebar mounting part 40 and a main body 42 with an upper surface 42a, a pair of side surfaces 42b and a bottom surface 42c. The main body 42 is constructed of one or more pieces of a hard rigid material such as a hard plastic. However, other suitable materials can be used for the main body 42. The handlebar mounting part 40 mounts the bicycle control device 14 to the bicycle handlebar 15 as best seen in Figure 6. In the illustrated embodiment, the handlebar mounting part 40 is conventional tube clamp that is attached to a rear end of the main body 42 of the bracket member 30. Since the handlebar mounting part 40 is a conventional metal tube clamp, the handlebar mounting part 40 will not be discussed and/or illustrated in detail herein.

The gripping part 44 is disposed between the handlebar mounting part 40 and the brake lever mounting part 46. The gripping part 44 has the electrical (non-shifting control) switch 36, while the brake lever mounting part 46 has the built-in LCD display unit 38. The brake lever mounting part 46 forms a front end of the bracket member 30 includes an upwardly projecting part 46a that extends upwardly relative to a portion of the upper surface 42a that is disposed on the gripping part 44.

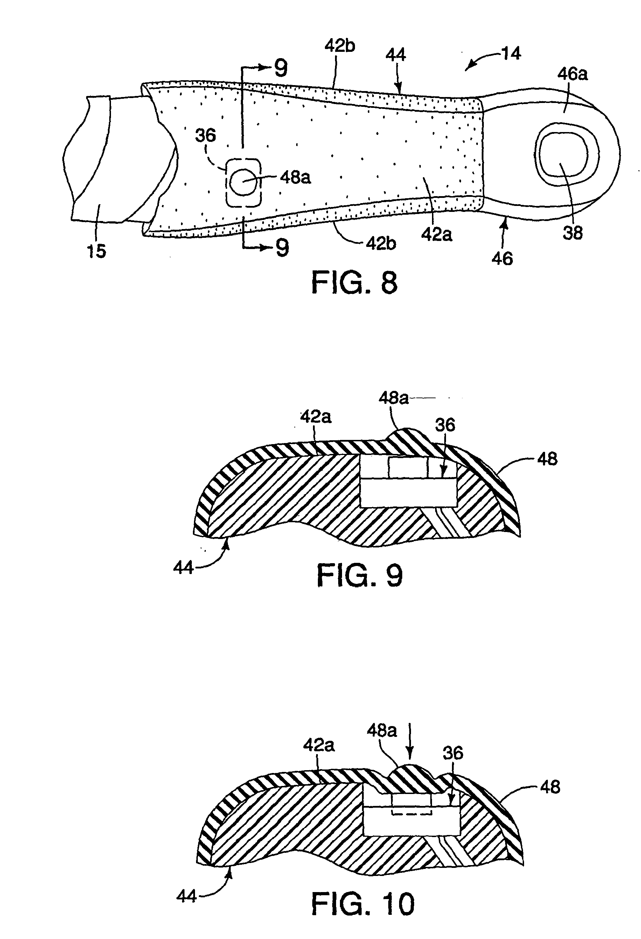

As best seen in Figures 3 and 6, the bracket member 30 further includes a cover member 48 overlying the gripping part 44. As best seen in Figures 9 and 10, the cover member 48 includes a raised portion 48a disposed directly over the electrical switch 36 to indicate the location of the electrical switch 36. Thus, the cover member 48 preferably overlies at least the part of the gripping part 44 that includes the electrical switch 36.

In this embodiment, the brake/shift lever 32 functions as both a brake lever and also as a shift operating lever. As seen in Figure 3, the brake/shift lever 32 is movably coupled to the bracket member 30 to perform a braking operation when pivoted about a pivot axis P1 in a rearward direction along a braking path B. The pivot axis P1 constitutes a coupling point between the main body 42 of the bracket member 30 and the brake/shift lever 32. As seen in Figures 4 and 7, the brake/shift lever 32 is also movably coupled to the bracket member 30 to perform a shifting operation when pivoted about a pivot axis P2 in a lateral direction along a shifting path S1. The shift operating lever 34 is pivotally attached to the brake/shift lever 32 to perform a shifting operation when pivoted about the pivot axis P2 in a lateral direction along a shifting path S2 as seen in Figure 5.

Preferably, the brake/shift lever 32 has a mounting part 32a and a lever part 32b. As seen in Figure 3, the brake/shift lever 32 is pivotally coupled to the brake lever mounting part 46 of the bracket member 30 at the coupling point P1 such that the lever part 32b of the brake/shift lever 32 extends from the coupling point P1 in a direction opposite of the upper surface 42a. In particular, as seen in Figure 7, the mounting part 32a of the brake/shift lever 32 is pivotally coupled to the main body 42 of the bracket member 30 by a pivot pin 50 which defines the pivot axis P1. The mounting part 32a and the lever part 32b pivot as a single unit (i.e. neither part moving with respect to each other), when the lever part 32b is pulled rearwardly to pivot the brake/shift lever 32 about the pivot axis P1. The mounting part 32a of the brake/shift lever 32 has a brake wire attachment structure 52 for attaching a brake cable 54 to operate the front braking device 19 when the lever part 32b is pulled rearwardly to pivot the brake/shift lever 32 about the pivot axis P1.

Preferably, as seen in Figures 4 and 7, the lever part 32b of the brake/shift lever 32 is also pivotally coupled to the mounting part 32a by a pivot pin 56 which defines the pivot axis P2 so that the lever part 32b of the brake/shift lever 32 pivots with respect to the main body 42 of the bracket member 30 as seen in Figure 4. The shift operating lever 34 is also pivotally attached to the mounting part 32a by the pivot pin 56 as seen in Figure 7. The shift operating lever 34 is biased to a rest position by a spring (not shown) in which the lever part 32b and the shift operating lever 34 are longitudinally aligned with each other, as illustrated in full lines in Figures 4 and 5. When the lever part 32b is pivoted about the pivot axis P2, an abutment of the lever part 32b contacts the shift operating lever 34 so that they pivot together as seen in phantom lines in Figure 4. A ball type detent is mounted on the mounting part 32a to hold the lever part 32b in its rest position. Preferably, the lever part 32b is biased to a rest position by a spring (not shown). Pivotal movement of the lever part 32b about the pivot axis P2 causes the front derailleur 18 to shift in a first direction. Pivotal movement of the shift operating lever 34 about the pivot axis P2 causes the front derailleur 18 to shift in a second direction that is opposite to the first direction.

In this embodiment, the electrical switch 36 is disposed on the gripping part 44 of the main body 42 in an area of the upper surface 42a of the gripping part 44 of the main body 42 that is located rearward of the coupling point P1 towards the rear end of the main body 42. In other words, the electrical switch 36 is disposed on the upper surface 42a of the gripping part 44 of the main body 42, since it prevents unintentional operation. Thus, if a rider wants to operate the electrical switch 36, the rider must move his or her hand and operate the switch intentionally.

The electrical switch 36 is a non-shifting control switch that operates a non-shifting device such as the built-in LCD display unit 38 (Figure 3), a remote cycle computer 60 (Figures 1 and 2) or a head lamp 62 (Figures 1 and 2). Thus, the electrical switch 36 can be a control switch that is electrically connected to the built-in LCD display unit 38 for changing screen displays. Alternatively, the electrical switch 36 can be a control switch that is electrically connected to the remote cycle computer 60 to control non-shifting functions of the remote cycle computer 60. Also the electrical switch 36 can be a control switch that is electrically connected to one of the derailleurs 16 and 18 to act as a mode enter switch for adjusting an initial position of electrically controlled derailleur(s). Moreover, the electrical switch 36 can be a control switch that is electrically connected to the head lamp 62 so as to act as an on/off switch. Basically, the electrical switch 36 operates a non-shifting device that is not so often operated.

As seen in Figures 9 and 10, the electrical switch 36 is recessed below the upper surface 42a of the gripping part 44 of the main body 42 of the bracket member 30. The electrical switch 36 is a pressure actuated switch that is actuated by applying pressure perpendicularly to the upper surface 42a of the gripping part 44 of the bracket member 30 as seen in Figures 9 and 10. The shift operating lever 34 is located behind the brake/shift lever 32, when the shift operating lever 34 and the brake/shift lever 32 are in rest positions.

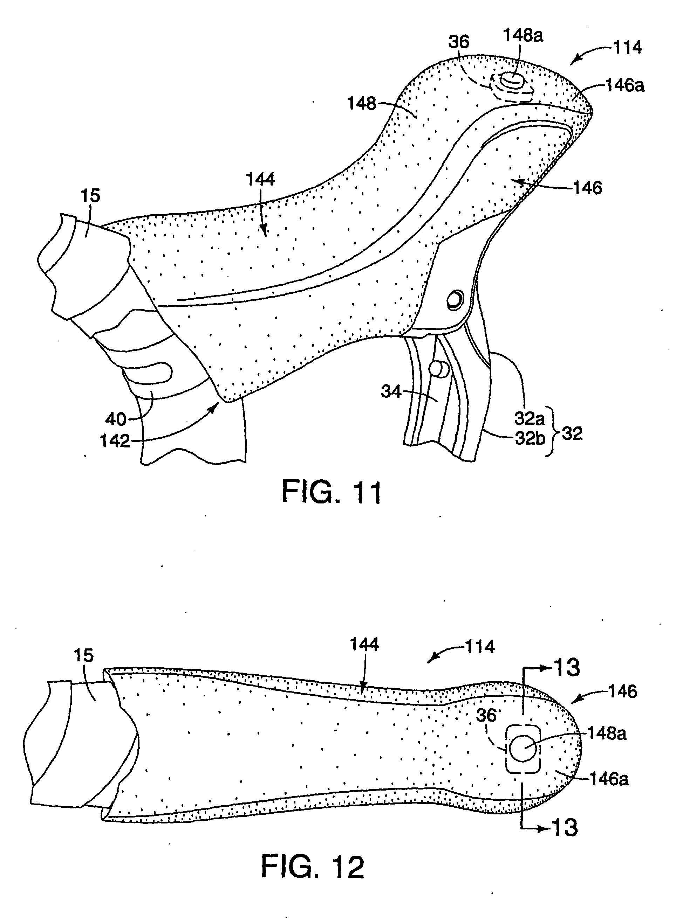

Referring now to Figures 11 to 14, a bicycle control (brake/shift) device 114 is illustrated in accordance with an example. In this example, the location of the electrical switch 36 has been changed. In view of the similarities between the first embodiments and the example, the parts of the example that are the same as the first embodiment will be given the same reference numerals. Basically, the bicycle control (brake/shift) device 114 is identical to the first embodiment, except that the main body 42 of the first embodiment has been modified to accommodate the new location of the electrical switch 36. Thus, the built-in LCD display unit 38 of the first embodiment has been eliminated in this example, since the electrical switch 36 is disposed on the upper surface of a front end of a modified main body 142.

The overall shape of the main body 142 is the same as the main body 42 of the first embodiment. Thus, the main body 142 is configured to form a gripping part 144 and a brake lever mounting part 146. The gripping part 144 is disposed between the handlebar mounting part 40 and the brake lever mounting part 146. In this example, the brake lever mounting part 146 has the electrical (non-shifting control) switch 36. In particular, the front end of the brake lever mounting part 146 of the main body 142 includes an upwardly projecting part 146a that extends upwardly relative to the gripping part 144. The non-shifting control switch 36 is located on the upper surface of the projecting part 146a of the brake lever mounting part 146. Here, a cover member 148 overlies the gripping part 144 and the upwardly projecting part 146a of the brake lever mounting part 146. The cover member 148 includes a raised portion 148a disposed directly over the electrical switch 36 to indicate the location of the electrical switch 36. Thus, the cover member 148 preferably overlies at least part of the brake lever mounting part 146 that includes the electrical switch 36.

As illustrated in Figures 13 and 14, the gripping part 144 has the electrical (non-shifting control) switch 36, which is the same as the electrical (non-shifting control) switch 36, discussed above. The electrical switch 36 is a non-shifting control switch that operates a non-shifting device such as the remote cycle computer 60 or the head lamp 62. Thus, the electrical switch 36 can be a control switch that is electrically connected to the remote cycle computer 60 for changing screen displays. Alternatively, the electrical switch 36 can be a control switch that is electrically connected to the remote cycle computer 60 to control other non-shifting functions of the remote cycle computer 60. Also the electrical switch 36 can be a control switch that is electrically connected to one of the derailleurs 16 and 18 to act as a mode enter switch for adjusting an initial position of electrically controlled derailleur(s). Moreover, the electrical switch 36 can be a control switch that is electrically connected to the head lamp 62 so as to act as an on/off switch.

Referring now to Figure 15, a bicycle control (brake lever) device 214 is illustrated in accordance with a second embodiment. The bicycle control (brake lever) device 214 has no shifting function or ability. The bicycle control (brake lever) device 214 basically includes a bracket member 230 and a brake lever 232. In this embodiment, the bracket member 230 has the handlebar mounting part 40 from the first embodiment and a modified main body 242. The main body 242 has an upper surface 242a, a pair of side surfaces 242b (only one seen in Figure 15) and a bottom surface 242c. The main body 242 is configured to form a gripping part 244 and a brake lever mounting part 246. The gripping part 244 has the electrical switch 36 and the cover 48, which are discussed above and illustrated in Figures 9 and 10. The electrical switch 36 is a non-shifting control switch that operates a non-shifting device such as the remote cycle computer 60 or the head lamp 62. Thus, the electrical switch 36 can be a control switch that is electrically connected to the remote cycle computer 60 for changing screen displays. Alternatively, the electrical switch 36 can be a control switch that is electrically connected to the remote cycle computer 60 to control other non-shifting functions of the remote cycle computer 60. Also the electrical switch 36 can be a control switch that is electrically connected to one of the derailleurs 16 and 18 to act as a mode enter switch for adjusting an initial position of electrically controlled derailleur(s). Moreover, the electrical switch 36 can be a control switch that is electrically connected to the head lamp 62 so as to act as an on/off switch.

While only selected embodiments have been chosen to illustrate the present invention, it will be apparent to those skilled in the art from this disclosure that various changes and modifications can be made herein without departing from the scope of the invention as defined in the appended claims. Furthermore, the foregoing descriptions of the embodiments according to the present invention are provided for illustration only, and not for the purpose of limiting the invention as defined by the appended claims.

## Claims

1. A bicycle control device (12, 14, 214) comprising:
a bracket member (30, 230) having a handlebar mounting part (40) and a main body (42, 242) with an upper surface (42a, 242a), a pair of side surfaces (42b, 242b) and a lower surface (42a, 242a), the main body (42, 242) being configured to form a gripping part (44, 244);
a brake lever (32, 232) pivotally coupled to the main body (42, 242) of the bracket member (30, 230) at a coupling point (P1) such that the brake lever (32, 232) extends from the coupling point (P1) in a direction opposite of the upper surface (42a, 242a) with a majority of the brake lever (32, 232) being disposed below the handlebar mounting part (40); and
a non-shifting control switch (36) disposed on the main body (42, 242) of the bracket member (30, 230) in an area of the upper surface (42a, 242a) of the main body (42, 242),
**characterized in that**
the non-shifting switch (36) is disposed in a recess in the upper surface (42a, 242a) of the gripping part (44, 244) such that it does not project from the upper surface (42a, 242a).

2. The bicycle control device (12, 14, 114) according to claim 1, wherein
the handlebar mounting part (40) is a tube clamp.

3. The bicycle control device (12, 14, 114) according to claim 1, wherein
the non-shifting control switch (36) is disposed on the gripping part of the main body (42, 142) in an area of the upper surface (42a, 242a) of the gripping part (44, 144) that is located rearward of the coupling point (P1) towards the handlebar mounting part (40).

4. The bicycle control device (12, 14, 114) according to claim 1, wherein
the bracket member (30, 230) includes a cover member (48, 148) overlying at least part of the gripping part (44, 144) that includes the non-shifting control switch (36).

5. The bicycle control device (12, 14, 114) according to claim 4, wherein
the cover member (48) includes a raised portion (48a) disposed directly over the non-shifting control switch (36) to indicate the location of the non-shifting control switch (36).

6. The bicycle control device (12, 14, 114) according to claim 1, wherein
the non-shifting control switch (36) is a pressure actuated switch that is actuated by applying pressure perpendicularly to the upper surface (42a, 242a) of the gripping part (44, 144).

7. The bicycle control device (12, 14, 114) according to claim 1, wherein
the bicycle control device (12, 14, 114) is a road brifter for drop handlebars.

8. The bicycle control device (12, 14, 114) according to claim 7, wherein
the brake lever (32, 232) is also a shift operating lever (34).

9. The bicycle control device (12, 14, 114) according to claim 7, further comprising a shift operating lever (34) located behind the brake lever (32, 232), when the shift operating lever (34) and the brake lever (32, 232) are in rest positions.

10. The bicycle control device (12, 14, 114) according to claim 1, wherein
the main body (42, 242) has a front end that includes an upwardly projecting part (146a) that extends upwardly relative to the gripping part (44, 144) with the non-shifting control switch (36) being located on the upper surface of the main body (42, 242) that extends along the upwardly projecting part (146a).

## Patentansprüche

1. Fahrradsteuervorrichtung (12, 14, 214), aufweisend:
ein Beschlagelement (30, 230), das einen Lenkstangen-Befestigungsteil (40) und einen Hauptkörper (42, 242) mit einer oberen Fläche (42a, 242a), einem Paar von Seitenflächen (42b, 242b) und einer unteren Fläche (42a, 242a) aufweist, wobei der Hauptkörper (42, 242) konfiguriert ist, um einen Greffteil (44, 244) zu bilden;
einen Bremshebel (32, 232), der mit dem Hauptkörper (42, 242) des Beschlagelementes (30, 230) an einem Verbindungspunkt (P1) schwenkbar verbunden ist, derart, dass sich der Bremshebel (32, 232) vom Verbindungspunkt (P1) in Richtung entgegengesetzt der oberen Fläche (42a, 242a) erstreckt, wobei ein überwiegender Teil des Bremshebels (32, 232) unterhalb des Lenkstangen-Befestigungsteils (40) angeordnet ist; und
einen nicht-schaltenden Steuerschalter (36), der am Hauptkörper (42, 242) des Beschlagelementes (30, 230) in einem Bereich der oberen Fläche (42a, 242a) des Hauptkörpers (42, 242) angeordnet ist,
**dadurch gekennzeichnet, dass**
der nicht-schaltende Schalter (36) in einer Vertiefung in der oberen Fläche (42a, 242a) des Greifteils (44, 244) angeordnet ist, derart, dass er nicht aus der oberen Fläche (42a, 242a) hervorsteht.

2. Fahrradsteuervorrichtung (12, 14, 114) nach Anspruch 1, wobei
der Lenkstangen-Befestigungsteil (40) eine Rohrklemme ist.

3. Fahrradsteuervorrichtung (12, 14, 114) nach Anspruch 1, wobei
der nicht-schaltende Steuerschalter (36) auf dem Greifteil des Hauptkörpers (42, 142) in einem Bereich der oberen Fläche (42a, 242a) des Greifteils (44, 144) angeordnet ist, der sich nach hinten vom Verbindungspunkt (P1) in Richtung zum Lenkstangen-Befestigungsteil (40) befindet.

4. Fahrradsteuervorrichtung (12, 14, 114) nach Anspruch 1, wobei
das Beschlagelement (30, 230) ein Abdeckungselement (48, 148) beinhaltet, das über zumindest einem Teil des Greifteils (44, 144) liegt, das den nicht-schaltenden Steuerschalter (36) beinhaltet.

5. Fahrradsteuervorrichtung (12, 14, 114) nach Anspruch 4, wobei
das Abdeckungselement (48) einen erhabenen Abschnitt (48a) beinhaltet, der direkt über dem nicht-schaltenden Steuerschalter (36) angeordnet ist, um den Ort des nicht-schaltenden Steuerschalters (36) anzuzeigen.

6. Fahrradsteuervorrichtung (12, 14, 114) nach Anspruch 1, wobei
der nicht-schaltende Steuerschalter (36) ein druckbetätigter Schalter ist, der **dadurch** betätigt wird, dass ein Druck senkrecht auf die obere Fläche (42a, 242a) des Greifteils (44, 144) aufgebracht wird.

7. Fahrradsteuervorrichtung (12, 14, 114) nach Anspruch 1, wobei
die Fahrradsteuervorrichtung (12, 14, 114) eine Brems-Schalthebelkombination (Road Brifter) für Rennlenker ist.

8. Fahrradsteuervorrichtung (12, 14, 114) nach Anspruch 7, wobei
der Bremshebel (32, 232) auch ein Schaltbedienhebel (34) ist.

9. Fahrradsteuervorrichtung (12, 14, 114) nach Anspruch 7, weiter aufweisend einen Schaltbedienhebel (34), der sich hinter dem Bremshebel (32, 232) befindet, wenn der Schaltbedienhebel (34) und der Bremshebel (32, 232) in Ruhepositionen sind.

10. Fahrradsteuervorrichtung (12, 14, 114) nach Anspruch 1, wobei
der Hauptkörper (42, 242) ein vorderes Ende aufweist, das einen nach oben vorstehenden Teil (146a) beinhaltet, welcher sich nach oben relativ zum Greifteil (44, 144) erstreckt, wobei der nicht-schaltende Steuerschalter (36) sich auf der oberen Fläche des Hauptkörpers (42, 242) befindet, die sich entlang dem nach oben vorstehenden Teil (146a) erstreckt.

## Revendications

1. Dispositif de commande de bicyclette (12, 14, 214) comprenant :
un organe de support (30, 230) ayant une partie de montage de cintre (40) et un corps principal (42, 242) avec une surface supérieure (42a, 242a), une paire de surfaces latérales (42b, 242b) et une surface inférieure (42a, 242a), le corps principal (42, 242) étant configuré pour former une partie de préhension (44, 244) ; un levier de frein (32, 232) couplé avec faculté de pivotement au corps principal (42, 242) de l'organe de support (30, 230) à un point de couplage (P1) de sorte que le levier de frein (32, 232) s'étend du point de couplage (P1) dans une direction opposée à la surface supérieure (42a, 242a), une majorité du levier de frein (32, 232) étant disposée sous la partie de montage de cintre (40) ; et
un commutateur de commande de blocage de vitesses (36) disposé sur le corps principal (42, 242) de l'organe de support (30, 230) dans une aire de la surface supérieure (42a, 242a) du corps principal (42, 242),
**caractérisé en ce que**
le commutateur de blocage de vitesses (36) est disposé dans un évidement dans la surface supérieure (42a, 242a) de la partie de préhension (44, 244) de sorte qu'il ne fait pas saillie depuis la surface supérieure (42, 242a).

2. Dispositif de commande de bicyclette (12, 14, 114) selon la revendication 1, dans lequel
la partie de montage de cintre (40) est un collier de serrage de tube.

3. Dispositif de commande de bicyclette (12, 14, 114) selon la revendication 1, dans lequel
le commutateur de commande de blocage de vitesses (36) est disposé sur la partie de préhension du corps principal (42, 142) dans une aire de la surface supérieure (42a, 242a) de la partie de préhension (44, 144) qui est située vers l'arrière du point de couplage (P1) en direction de la partie de montage de cintre (40).

4. Dispositif de commande de bicyclette (12, 14, 114) selon la revendication 1, dans lequel
l'organe de support (30, 230) comprend un organe de recouvrement (48, 148) recouvrant au moins une partie de la partie de préhension (44, 144) qui comprend le commutateur de commande de blocage de vitesses (36).

5. Dispositif de commande de bicyclette (12, 14, 114) selon la revendication 4, dans lequel
l'organe de recouvrement (48) comprend une portion surélevée (48a) disposée directement sur le commutateur de commande de blocage de vitesses (36) pour indiquer l'emplacement du commutateur de commande de blocage de vitesses (36).

6. Dispositif de commande de bicyclette (12, 14, 114) selon la revendication 1, dans lequel
le commutateur de commande de blocage de vitesses (36) est un commutateur activé par pression qui est activé en appliquant une pression perpendiculairement à la surface supérieure (42a, 242a) de la partie de préhension (44, 144).

7. Dispositif de commande de bicyclette (12, 14, 114) selon la revendication 1, dans lequel
le dispositif de commande de bicyclette (12, 14, 114) est un levier frein/vitesses (« brifter ») pour guidon de course.

8. Dispositif de commande de bicyclette (12, 14, 114) selon la revendication 7, dans lequel
le levier de frein (32, 232) est également un levier d'actionnement de changement de vitesses (34).

9. Dispositif de commande de bicyclette (12, 14, 114) selon la revendication 7, comprenant en outre un levier d'actionnement de changement de vitesses (34) situé derrière le levier de frein (32, 232) lorsque le levier d'actionnement de changement de vitesse (34) et le levier de frein (32, 232) sont en position de repos.

10. Dispositif de commande de bicyclette (12, 14, 114) selon la revendication 1, dans lequel
le corps principal (42, 242) a une extrémité avant qui comprend une partie en saillie vers le haut (146a) qui s'étend vers le haut par rapport à la partie de préhension (44, 144) avec le commutateur de commande de blocage de vitesses (36) situé sur la surface supérieure du corps principal (42, 242) qui s'étend le long de la partie en saillie vers le haut (146a).
